# EUROPEAN PATENT SPECIFICATION

(11) **EP 4 423 582 B1**
(45) Date of publication and mention of the grant of the patent: **27.08.2025**
(21) Application number: 22802644.9
(22) Date of filing: 20.10.2022
(51) Int. Cl.: G05B 23/02

(54) **SYSTEM, APPARATUS AND METHOD FOR MONITORING CONDITION OF AN ASSET IN TECHNICAL INSTALLATION**
SYSTEM, VORRICHTUNG UND VERFAHREN ZUR ÜBERWACHUNG DES ZUSTANDS EINES BESTANDTEILS IN EINER TECHNISCHEN ANLAGE
SYSTÈME, APPAREIL ET PROCÉDÉ DE SURVEILLANCE DE L'ÉTAT D'UN ACTIF DANS UNE INSTALLATION TECHNIQUE

(30) Priority: 28.10.2021 EP 21205196
(43) Date of publication of application: 04.09.2024
(73) Proprietor: Siemens Aktiengesellschaft, 80333 München (DE)
(72) Inventor: KANCHI, Janakiram, Bangalore, Karnataka 560069 (IN); KULKARNI, Nikhil Vishwas, Bangalore, Karnataka 560062 (IN); R, Basavaraj, Bangalore, Karnataka 560037 (IN); R, Nirmal Sabaree, Bangalore, Karnataka 560100 (IN); SHARMA, Sunny, Bangalore, Karnataka 560102 (IN)
(74) Representative: Isarpatent
(86) International application number: PCT/EP2022/079214
(87) International publication number: WO 2023/072724

(56) References cited:
- WILSON REGINAD: "Multivariate data analysis in hydroelectric system maintenance: A decision evaluation case study", 2015 ANNUAL IEEE SYSTEMS CONFERENCE (SYSCON) PROCEEDINGS, IEEE, 13 April 2015 (2015-04-13), pages 365 - 372, XP032782327, DOI: 10.1109/SYSCON.2015.7116778
- SAKRUTINA EKATERINA: "Assessing Algorithm of the Risk Potential of Critical Infrastructure of a NPP Based on Technical and Economic Indicators", 2019 TWELFTH INTERNATIONAL CONFERENCE "MANAGEMENT OF LARGE-SCALE SYSTEM DEVELOPMENT" (MLSD), IEEE, 1 October 2019 (2019-10-01), pages 1 - 4, XP033640918, DOI: 10.1109/MLSD.2019.8911076

## Description

The present invention relates to a field of monitoring systems and more particularly relates to monitoring condition of an asset in a technical installation.

Industrial facilities or technical installations employ numerous assets for performing different operations. The assets may include mechanical systems, electromechanical systems, electronic systems and so on. In particular, the assets may include rotating equipment such as industrial fans, pumps, compressors and so on that are essential components. It is extremely important to continuously monitor such assets in order for an industrial facility to function smoothly. However, any fault or inefficiency in the operation or malfunctioning of assets may lead to major issues in a plant such as unplanned production halts and delays, increased expenditure, loss of revenue, and potential accidents in the plant. Hence it is critical to provide early warning of such issues even before the problems occur.

However, there are several challenges in monitoring an overall health of the equipment on a large scale. One of the major problems is that the lifecycle of such equipment depends on various factors and parameters which directly or indirectly influence the health of the equipment. In such complex automated production process environments, though, numerous data is available across different systems on the plant. Currently, exiting condition monitoring systems help to derive the root cause of the faults but lack the ability to predict future failures by analyzing multivariate data generated at high or low frequency. Furthermore, it is extremely challenging to perform the analysis of the data received by devices deployed at the edge of a particular industrial facility. Such monitoring systems depend on manual guidance and manual configuration of threshold values to monitor the overall health of the equipment. Moreover, the analysis of overall health, estimation of breakdown time, and so on are performed manually. This process is time consuming, error prone, and requires experts to draw insights from data which is extremely challenging. Furthermore, another major challenge with existing systems is the failure to adapt to dynamic changes in operational ranges of the industrial environment with time which leads to inaccurate analysis and poor condition monitoring. Moreover, the user lacks a wholistic picture of condition of multiple assets in an industrial environment.

The prior art "Assessing Algorithm of the Risk Potential of Critical Infrastructure of a NPP Based on technical and Economic Indicators"; 2019 12TH INTERNATIONAL CONFERENCE "MANAGMENT OF LARGE-SCALE SYSTEM DEVELOPMENT" (MLSD), IEEE; 1 October 2019 (2019-10-01)" discloses calculation of technical and economic indicators and its relation with ensuring normal operation of nuclear power plants.

The prior art "REGINAD, WILSON: "Multivariate Data Analysis in Hydroelectric System Maintenance: A Decision Evaluation Case Study"; 2015 ANNUAL IEEE SYSTEMS CONFERENCE (SYSCON) PROCEEDINGS, IEEE; 13 April 2015 (2015-04-13)" discloses multivariate data analysis in hydroelectric maintenance systems using statistical regression techniques.

In light of the above, there exists a need for accurately monitoring the condition of an asset in a technical installation.

Therefore, it is an object of the present invention to provide a system, apparatus and method for monitoring the condition of an asset in a technical installation.

The object of the present invention is achieved by a method for monitoring the condition of an asset in a technical installation according to the wording of claim 1.

The term 'asset' as used herein, may refer to any device, system, instrument or machinery manufactured or used in an industry or any other installation that may be employed for performing an operation. Example of assets include any machinery in a technical system or technical installation/facility such as motors, gears, bearings, shafts, switchgears, rotors, circuit breakers, protection devices, remote terminal units, transformers, reactors, disconnectors, gear-drive, gradient coils, magnet, radio frequency coils etc. Exemplary technical systems include turbines, large drives, etc. Example facility/technical installation may be a complex industrial set-up with a plurality of assets such as a power plant, wind farm, power grid, manufacturing facility, process plants and so on.

The method comprises receiving condition data from one or more sources associated with the asset. The condition data is multivariate data indicative of one or more operating conditions of the asset. The 'multivariate data' refers to data received from the asset which includes multiple variables. In one embodiment, the condition data comprises an output of at least one sensing unit associated with the asset in real-time. It must be understood that the term 'sensing unit' as used herein includes both transducers and sensors. The one or more sensors may include sensing units as well as database for storing historical data as received from sensing units.

The method comprises identifying one or more critical parameters associated with the operation of the asset based on the received condition data. The term 'critical parameters' refer to one or more parameters that are directly related to an overall health of the asset. The method comprises generating a forecast model representing relationship between the identified critical parameters associated with the asset. The method comprises predicting values of the critical parameters of the asset based on the generated forecast model for a given time period. The method comprises determining whether the predicted values of the critical parameters are within a predefined operational range of the critical parameters. Further, the method comprises recommending one or more actions on a display device if the predicted values of the critical parameters are beyond the predefined operational range of the critical parameters of the asset. Advantageously, the invention determines one or more actions that need to be performed in order to efficiently operate the asset so as to mitigate any major failures. In embodiment, the method further comprises automatically controlling an operation of one or more assets based on the recommended actions.

In an embodiment, the method comprises evaluating an accuracy of the forecast model based on a comparison between the predicted values of the critical parameters and current values of the critical parameters for the given time period. The method comprises retraining the forecast model using a reinforcement learning model if the accuracy of the forecast model is below a predefined threshold value.

In an embodiment, the method of retraining the forecast model using the reinforcement learning model if the accuracy of the forecast model is below the predefined threshold value comprises retraining the forecast model using a new set of training data. The method comprises evaluating the accuracy of the retrained forecast model. The method comprises evaluating the values of the critical parameters, correlation between critical parameters and operational ranges of the assets based on the current condition data received in real-time, if the accuracy of the retrained forecast model is below the predefined threshold value. The method comprises updating the retrained forecast model based on the evaluation. Advantageously, the present invention continuously retrains the forecast model such that the predicted forecasts are accurate. In an embodiment, the forecast model is retrained after regular intervals of time.

In an embodiment, the method further comprises determining at least one fault associated with the received condition data using a first trained machine learning model. Advantageously, the invention identifies faults in the asset such that the faults can be analyzed, resolved and contained in a timely manner and other assets can be prevented from the damage in real-time.

In an embodiment, the method of determining the at least one fault associated with the asset based on the received condition data using the first trained machine learning model comprises receiving condition data from one or more sensing units associated with the assets in real-time. Further, the method comprises detecting at least one fault in the received condition data. Further, the method comprises classifying the detected fault into at least one of predetermined classes of faults in the asset using the trained first machine learning model. Further, the method comprises determining the at least one fault associated with the received condition data based on the classification. Advantageously, the present invention classifies and labels of identified faults under different classes to effectively determine which particular faults have a higher frequency and require further root cause analysis.

In an embodiment, the method further comprises determining a deviation in the operation of the asset using a second trained machine learning model. In an embodiment, the method of determining a deviation in the operation of the asset using a second trained machine learning model further comprises calculating a value of a lower limit of the identified critical parameters of the asset based on the received condition data. The method comprises calculating a value of an upper limit of the identified critical parameters of the asset based on the received condition data. The method comprises determining an operational range of the asset based on the calculated lower limit and calculated upper limit of each of the identified critical parameters of the asset. The method comprises determining whether the current values of the critical parameters of the asset are within the determined operational range. The method comprises determining a deviation in current values of the critical parameters of the asset if the current values are beyond the determined operational range. Advantageously, the present invention provides a method to dynamically determine threshold values of the critical parameters of the asset.

In an embodiment, the method further comprises determining a level of criticality of the deviation in current values of the critical parameters of the asset with respect to the determined operational range. Advantageously, the invention classifies a severity of the deviation in the operation of the asset such that highly critical parameters or assets can be prioritized for maintenance.

In an embodiment, the method further comprises determining remaining maintenance life of the asset based on the determined at least one fault associated with the received condition data based on the classification. The term 'remaining maintenance life' (RML) as used herein, refers to a duration between initiation of a detectable failure a functional failure of the asset. Advantageously, the invention predicts RML to schedule maintenance activities, optimize operating efficiency, and avoid unplanned downtime.

In an embodiment, the method of determining remaining maintenance life of the asset comprises generating a degradation model of the asset based on the determined at least one fault associated with the received condition data based on the classification. Further, the method comprises determining the remaining maintenance life of the asset based on the generated degradation model. Advantageously, the present invention uses pre-classified faults to build a degradation model instead of prestored run-to-failure or maintenance data which may not be available.

In an embodiment, the method further comprises rendering a representative view of the of the condition of the asset on a display device.

According to the invention an apparatus for monitoring condition of an asset in a technical installation is defined by the wording of claim 13.

The apparatus comprises one or more processing units, and a memory unit communicatively coupled to the one or more processing units. The memory unit comprises an asset monitoring module stored in the form of machine-readable instructions executable by the one or more processing units. The asset monitoring module is configured to perform method steps described above. The execution of the condition management module may also be performed using co-processors such as Graphical Processing Unit (GPU), Field Programmable Gate Array (FPGA) or Neural Processing/Compute Engines.

According to a non-claimed embodiment of the present invention, the apparatus can be an edge computing device. As used herein "edge computing" refers to computing environment that is capable of being performed on an edge device (e.g., connected to sensing units in an industrial setup and one end and to a remote server(s) such as for computing server(s) or cloud computing server(s) on other end), which may be a compact computing device that has a small form factor and resource constraints in terms of computing power. A network of the edge computing devices can also be used to implement the apparatus. Such a network of edge computing devices is referred to as a fog network.

In another non-claimed embodiment, the apparatus is a cloud computing system having a cloud computing based platform configured to provide a cloud service for analyzing analyzing defects in a bearing. As used herein, "cloud computing" refers to a processing environment comprising configurable computing physical and logical resources, for example, networks, servers, storage, applications, services, etc., and data distributed over the network, for example, the internet. The cloud computing platform may be implemented as a service for analyzing defects in a bearing. In other words, the cloud computing system provides on-demand network access to a shared pool of the configurable computing physical and logical resources. The network is, for example, a wired network, a wireless network, a communication network, or a network formed from any combination of these networks.

Additionally, the object of the present invention is achieved by a system for monitoring condition of an asset in a technical installation according to the wording of claim 14. The system comprises one or more sources capable of providing condition data associated with an asset and an apparatus as described above, communicatively coupled to the one or more sources. The term 'sources' as used herein, refer to electronic devices configured to obtain and transmit the condition data to the apparatus. Non-limiting examples of sources include sensing units, controllers and edge devices. The object of the present invention is also achieved by a computer-readable medium, according to the wording of claim 15.

The above-mentioned attributes, features, and advantages of this invention and the manner of achieving them, will become more apparent and understandable (clear) with the following description of embodiments of the invention in conjunction with the corresponding drawings. The illustrated embodiments are intended to illustrate, but not limit the invention.
- FIG 1A: illustrates a block-diagram of a system for monitoring condition of an asset in a technical installation, in accordance with an embodiment of the present invention;
- FIG 1B: illustrates a block-diagram of an apparatus for monitoring condition of an asset in a technical installation, in accordance with an embodiment of the present invention;
- FIG 2: illustrates a block-diagram of an exemplary system for monitoring condition of an asset in a technical installation, in accordance with an embodiment of the present invention;
- FIG 3: depicts a flowchart of a method for monitoring condition of an asset in a technical installation, in accordance with an embodiment of the present invention;
- FIG 4: depicts a flowchart of a method for determining the at least one fault associated with the received condition data using a first trained machine learning model, in accordance with an embodiment of the present invention;
- FIG 5: depicts a flowchart of a method for determining a deviation in the operation of the asset using a second trained machine learning model, in accordance with an embodiment of the present invention;
- FIG 6: depicts a flowchart of a method for retraining the forecast model using a reinforcement learning model, in accordance with an embodiment of the present invention;
- FIG 7: is a Graphical User Interface view showing an example of determined faults, in accordance with an embodiment of the present invention;
- FIG 8: is a Graphical User Interface view showing an example criticality of deviation of critical parameters, in accordance with an embodiment of the present invention;
- FIG 9: is a Graphical User Interface view showing an example of operational range of critical parameters as obtained from condition data, in accordance with an embodiment of the present invention;
- FIG 10: is a Graphical User Interface view showing an example of a correlation matrix between various parameters, in accordance with an embodiment of the present invention;
- FIG 11: is a Graphical User Interface view showing forecasted values and current values of critical parameters for a particular time period, in accordance with an embodiment of the present disclosure;
- FIG 12: is a Graphical User Interface view showing forecasted values and current values of critical parameters for a particular time period, in accordance with another embodiment of the present disclosure; and
- FIG 13: is a Graphical User Interface view showing degradation profiles for estimation remaining maintenance life of the asset, in accordance with another embodiment of the present disclosure.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments.

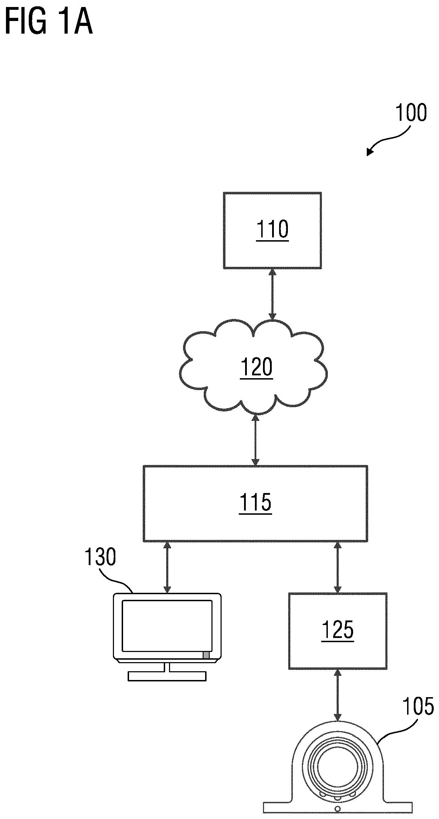

FIG 1A illustrates a block-diagram of a system 100 for monitoring the condition of an asset 105 in a technical installation, in accordance with an embodiment of the present invention. Example of assets 105 include any machinery in a technical system or technical installation/facility such as motors, gears, bearings, shafts, switchgears, rotors, circuit breakers, protection devices, remote terminal units, transformers, reactors, disconnectors, gear-drive, gradient coils, magnet, radio frequency coils etc. Exemplary technical systems include turbines, large drives, Magnetic Resonance Imaging (MRI) scanner, etc. Example facility/technical installation may be a complex industrial set-up with a plurality of assets such as a power plant, wind farm, power grid, manufacturing facility, process plants and so on.

The system 100 comprises an apparatus 110 communicatively coupled to one or more edge devices 115. The one or more edge devices 115 are connected to the apparatus 110 via a network 120, for example, local area network (LAN), wide area network (WAN), WiFi, etc. Each of the edge devices 115 is configured to receive sensor data from at least one sensing unit 125 associated with the asset 105. The at least one sensing unit 125 may include, for example, a vibration sensor, a velocity sensor, an acceleration sensor, a force sensor, a temperature sensor, a voltage sensor and other electrical parameters sensors. The sensor data corresponds to an output of the at least one sensing unit 125. For example, the output from the at least one sensing unit 125 may be in the form of temperature data, voltage data, vibration data, velocity data, acceleration data or force data. In an embodiment, the sensor data are obtained through data acquisition interfaces on the edge device 115. The edge device 115 provides the sensor data in real-time to the apparatus 110.

In addition, one or more previously obtained parameters may be stored in a memory of the edge device 115 or may be input to the edge device 115 by an operator. For example, the edge device 115 may be communicatively coupled to a client device 130. Non-limiting examples of client devices 130 include, personal computers, workstations, personal digital assistants, human machine interfaces. The client device 130 may enable the user to input request to visualize overall condition of an asset 105 through a web-based interface. Upon receiving the request for monitoring health of a particular asset 105 from the user, the edge device 115 transmits a request for analyzing the condition parameters of the asset 105 to the apparatus 110.

In the present embodiment, the apparatus 110 is deployed in a cloud computing environment. As used herein, "cloud computing environment" refers to a processing environment comprising configurable computing physical and logical resources, for example, networks, servers, storage, applications, services, etc., and data distributed over the network 120, for example, the internet. The cloud computing environment provides on-demand network access to a shared pool of the configurable computing physical and logical resources. The apparatus 110 may include a module that monitors the condition of the asset 105 based on the corresponding sensing unit 125 data. Additionally, the apparatus 110 may include a network interface for communicating with the one or more edge devices 115 via the network 120.

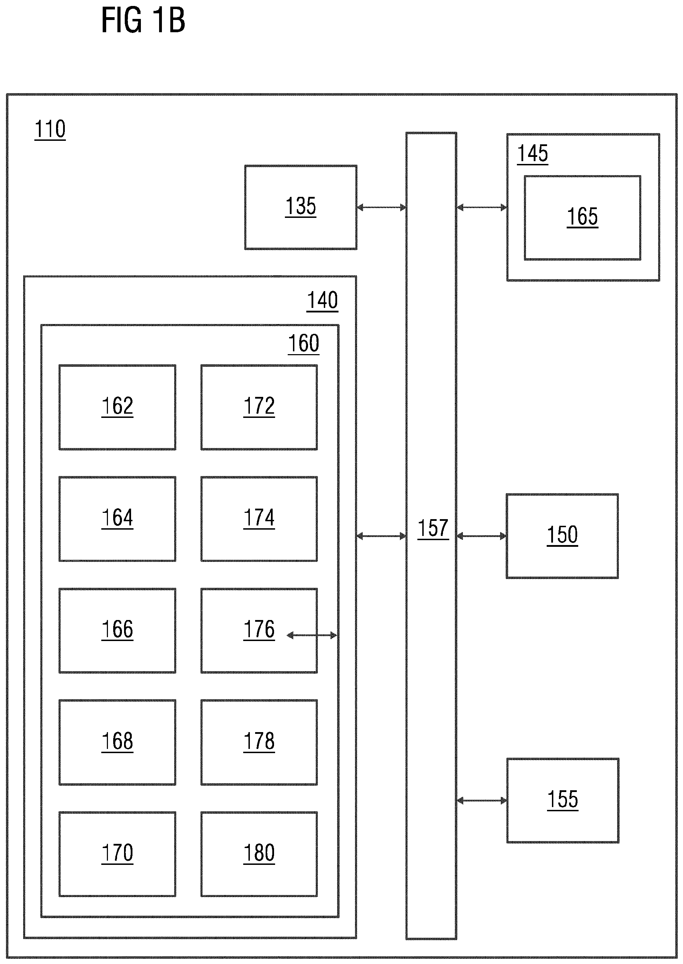

The apparatus 110 comprises a processing unit 135, a memory unit 140, a storage unit 145, a communication unit 150, the network interface 155 and a standard interface or bus 157, as shown in FIG 1B. The apparatus 110 can be a computer, a workstation, a virtual machine running on host hardware, a microcontroller, or an integrated circuit. As an alternative, the apparatus 110 can be a real or a virtual group of computers (the technical term for a real group of computers is "cluster", the technical term for a virtual group of computers is "cloud").

The term 'processing unit' 135, as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 135 may also include embedded controllers, such as generic or programmable logic devices or arrays, application specific integrated circuits, single-chip computers, and the like. In general, a processing unit 135 may comprise hardware elements and software elements. The processing unit 135 can be configured for multi-threading, i.e. the processing unit 135 may host different calculation processes at the same time, executing the either in parallel or switching between active and passive calculation processes.

The memory unit 140 may be volatile memory and non-volatile memory. The memory unit 140 may be coupled for communication with the processing unit 135. The processing unit 135 may execute instructions and/or code stored in the memory unit 140. A variety of computer-readable storage media may be stored in and accessed from the memory unit 140. The memory unit 140 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

The memory unit 140 comprises an asset monitoring module 160 in the form of machine-readable instructions on any of the above-mentioned storage media and may be in communication to and executed by the processing unit 135. The asset monitoring module 160 comprises a data acquisition module 162, preprocessing module 164, configuration module 166, forecast model generation module 168, fault detection module 170, deviation determination module 172, recommendation module 174, retraining module 176, remaining maintenance life prediction module 178, and notification module 180.

The data acquisition module 162 is configured for receiving condition data from one or more sources associated with the asset 105. The condition data may be received from sensing units 125, historical databases, SCADA systems, other third party devices and so forth.

The preprocessing module 164 is configured for receiving the condition data from the data acquisition module and processing the data to an understandable format. Further, the preprocessing module 164 is configured for normalizing the multivariate data for further processing by the forecast model, first machine learning model and second machine learning model.

The configuration module 166 is configured for tagging the condition data as received from different sources to a particular asset 105. The tags may be configured by the user using a web-based application. The data tagged with corresponding assets are then stored in the database 165 for future reference.

The forecast model generation module 168 is configured for identifying one or more critical parameters associated with the operation of the asset 105 based on the received condition data and determining a correlation matrix representing relationship between the identified critical parameters associated with the asset 105. Further, the forecast model generation module 168 is configured for predicting values of the critical parameters of the asset 105 based on the generated forecast model for a given time period.

The fault detection module 170 is configured for determining at least one fault associated with the received condition data using a first trained machine learning model. The fault detection module 170 is further configured for classifying and labelling the detected faults.

The deviation determination module 172 is configured for calculation lower limit and upper limit of the critical parameters of the asset 105 based on the condition data. The deviation determination module 172 is further configured for determining an operational range of the asset 105 based on the calculated lower limit and calculated upper limit of each of the identified critical parameters of the asset 105. The deviation determination module 172 is further configured for determining a level of criticality of the deviation in current values of the critical parameters of the asset 105 with respect to the determined operational range.

The recommendation module 174 is configured for determining one or more actions to be performed if the critical parameters are beyond the predefined range of the values of the critical parameters of the asset 105, or a deviation is determined from the operational ranges.

The retraining module 176 is configured for evaluating an accuracy of the forecast model and retraining the forecast model using the reinforcement learning model if the accuracy of the forecast model is below the predefined threshold value. The retraining module 176 is further configured for evaluating the accuracy of machine learning models in the system 100 and retraining the same.

The remaining maintenance life prediction module 178 is configured for determining remaining maintenance life of the asset 105 based on the determined at least one fault associated with the received condition data based on the classified faults.

The notification module 180 is configured for generating a notification indicating the remaining maintenance life of the asset 105 on an output device. In the present embodiment, the output device may be the client device 130.

The storage unit 145 comprises a non-volatile memory which stores default bearing parameters associated with standard bearing numbers. The storage unit 145 includes a database 165 that comprises tags associated with condition data, relationship between different critical parameters, condition data and the like. The bus 157 acts as interconnect between the processing unit 135, the memory unit 140, the storage unit, and the network interface 155. The communication unit 150 enables the apparatus 110 to receive requests from the one or more edge devices 115. The communication unit 150 may support different standard communication protocols such as Transport Control Protocol/Internet Protocol (TCP/IP), Profinet, Profibus, and Internet Protocol Version (IPv).

Those of ordinary skilled in the art will appreciate that the hardware depicted in FIG 1A and 1B may vary for different implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter, network connectivity devices also may be used in addition or in place of the hardware depicted. The depicted example is provided for the purpose of explanation only and is not meant to imply architectural limitations with respect to the present disclosure.

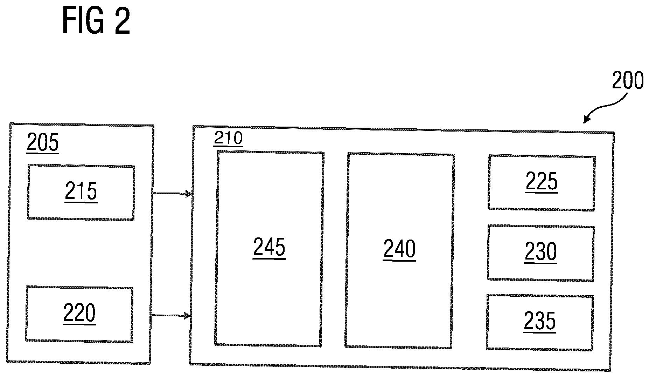

FIG 2 illustrates a block-diagram of an exemplary system 200 for monitoring condition of an asset 105 in a technical installation, in accordance with an embodiment of the present invention. The system 200 comprises a client 205 and server 210. The client 205 comprises a mobile application interface 215 and a web application interface 220. The server 210 comprises a data acquisition layer 225, data storage layer 230, and an asset configuration layer 235. Further, the server 210 comprises a processing engine 240 and a visualization layer 245. The visualization layer 245 contains APIs that enable interaction between the client 205 and the server 210. The user may raise requests and view requested information, receive recommendations and notification via the mobile application interface 215 and/or the web application interface 220.

The data acquisition layer 225 is configured for receiving condition data from one or more sources associated with the asset 105. The condition data may be received from sensing units 125, historical databases, SCADA systems, other third party devices and so forth. The data acquisition layer 225 manages the connectivity through different protocols supported by different sensing units and/or third party devices. In an exemplary embodiment, the data acquisition layer 225 comprises OPC servers, OPC clients and southbound connectors. The OPC UA server layer provides the connection from one or more PLCs and obtain the data from industrial standards such as OPC UA. Once the data is available, it is fetched by the specific client. The OPC UA client layer reads the data continuously and provides the data depending on configuration. The southbound connectors enable that data from various configurators can be provide data with specific protocols such as PROFINET, s7 and s7 plus.

The data storage layer 230 is configured for storing the data in a predefined format. In an example, the data may be asset tagging configuration data, user roles data, processed data and correlation values. The data storage layer 230 provides data adapters for various databases like RDBMS, NOSQL database, time series databases which may be configured, and respective data can be stored.

The asset configuration layer 235 is configured for performing asset tagging or asset mapping for storing the received condition data. The tags may be configured by the user and the asset 105 related data is then stored in the database 165. The system 100 provides CRUD based API where the configuration may be created, read, updated, or deleted. The hierarchy of the tags is available and data pertaining to the same can be retrieved and displayed in dashboards on user devices 130.

The processing engine 240 is configured for all the functionality of the asset monitoring module 160 (as shown in FIG 1B). The processing engine 240 is configured for identifying one or more critical parameters associated with the operation of the asset 105 based on the received condition data and determining a correlation matrix representing relationship between the identified critical parameters associated with the asset 105. Further, the processing engine 240 is configured for predicting values of the critical parameters of the asset 105 based on the generated forecast model for a given time period. The processing engine 240 is configured for determining at least one fault associated with the received condition data using the first trained machine learning model. The processing engine 240 is further configured for classifying and labelling the detected faults. The processing engine 240 is configured for calculation lower limit and upper limit of the critical parameters of the asset 105 based on the condition data. The processing engine 240 is further configured for determining an operational range of the asset 105 based on the calculated lower limit and calculated upper limit of each of the identified critical parameters of the asset 105. The processing engine 240 is configured for determining one or more actions to be performed if the critical parameters are beyond the predefined range of the values of the critical parameters of the asset 105, or a deviation is determined from the operational ranges. The processing engine 240 evaluating an accuracy of the forecast model and retraining the forecast model using the reinforcement learning model if the accuracy of the forecast model is below the predefined threshold value. The processing engine 240 is configured for determining remaining maintenance life of the asset 105 based on the determined at least one fault associated with the received condition data based on the classified faults. The processing engine 240 is configured for generating a notification indicating the remaining maintenance life of the asset 105 on client device 130.

The above explained architecture of the system 200 may be deployed in various ways including standalone solutions on-premise, edge based deployment, cloud based deployment, or hybrid distributed deployments including edge and cloud simultaneously. It will be appreciated that the various deployment strategies can be customized easily since the entire solution is built using microservice based architecture and consists of various independent microservices organized around the key features and capabilities of the system 200. Moreover, different module of the system may be deployed as different components and may be reused depending on the requirement, billing, or environment.

The visualization layer 245 is also componentized using micro-frontends. The micro-frontends may be configured to provide different independent services own services and along with a graphical user interface (GUI). In an embodiment, the different micro-frontends may include a main application component, a configuration component, a user management component, and processing engine component. In an example, the main application component collaborates all the other components. Some of the processing is also a part of architecture which helps other APIs to communicate. The main application component maybe deployed and may provide independent functionality. The configuration component provides complete configuration of assets and tags as mentioned above. The configuration component can also be deployed as an independent component. Further, the user management component may provide different user profiles, roles, and access to the application. The processing engine component can be deployed as an independent component with the user management component and is configured to provide various functionalities of the processing engine 240 as mentioned above.

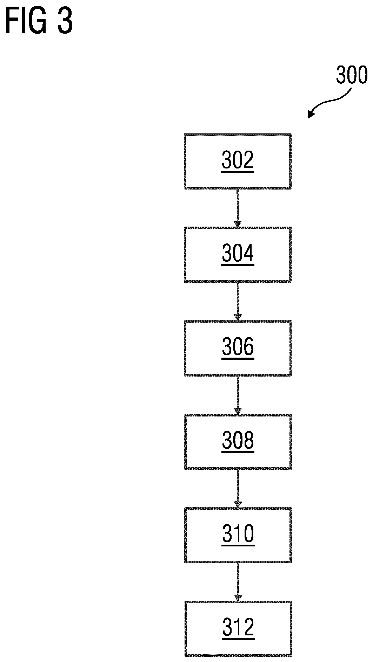

FIG 3 depicts a flowchart of a method 300 for monitoring condition of an asset 105 in a technical installation, in accordance with an embodiment of the present invention. At step 302, condition data is received from one or more sources associated with the asset 105. The condition data is multivariate data indicative of one or more operating conditions of the asset 105. In an embodiment, the multivariate data is received from various sensing units 125 such as a vibration sensor, a velocity sensor, an acceleration sensor, a force sensor, a temperature sensor, a voltage sensor and other electrical parameters sensors. The condition data may be received from sensing units 125, historical databases, SCADA systems, other third party devices and so forth. The received condition data is preprocessed for further processing. Furthermore, the received condition data is tagged to corresponding assets 105 and stored in the database 165 for future reference.

At step 304, one or more critical parameters associated with the operation of the asset 105 are identified based on the received condition data. The critical parameters that directly impact the overall efficiency of the asset 105 are identified. In an exemplary embodiment, the one or more critical parameters may be temperature, pressure, speed pertaining to the operation of the asset. It will be appreciated that critical parameters of the asset 105 are identified for further analysis as the overall health of the asset 105 depends on critical parameters. This avoids analyzing all the non-critical parameters of the asset 105 which does not critically affect the performance of the asset 105.

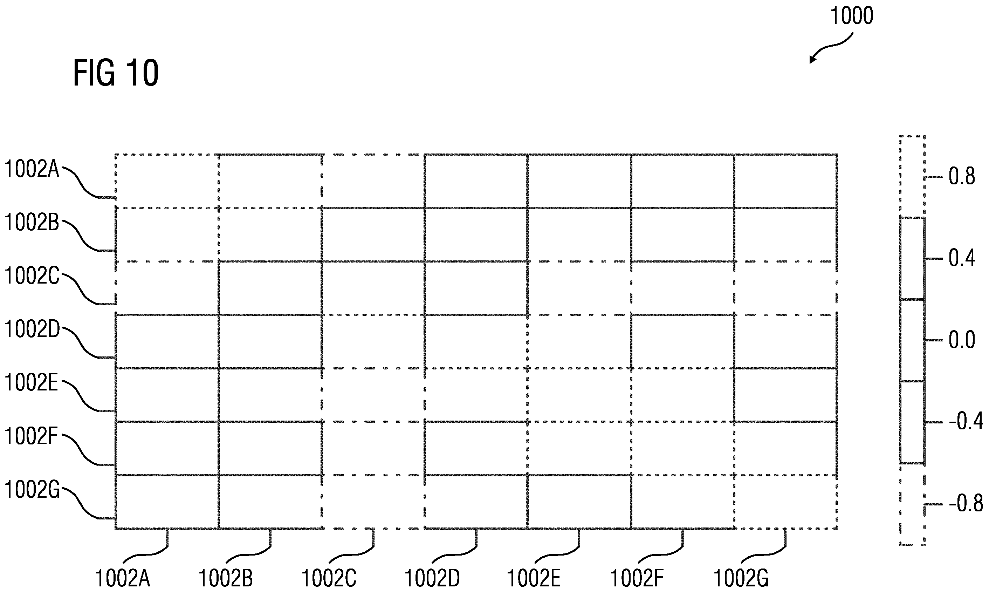

At step 306, a forecast model is generated based on a correlation matrix. The correlation matrix represents relationship between the identified critical parameters associated with the asset 105. Notably, a relationship between the critical parameters is established. The relationships between various critical parameters are represented in the form of the correlation matrix. An exemplary correlation matrix can be seen in FIG 10. As may be seen, FIG 10 is a Graphical User Interface view 1000 showing an example of a correlation matrix between various critical parameters, in accordance with an embodiment of the present invention. As shown, the critical parameters may be motor current 1002A, motor voltage 1002B, inlet pressure 1002C, inlet temperature 1002D, fan speed in x-direction 1002E, fan speed in y-direction 1002F, waste gas fan rotation per minute (RPM) 1002G. The correlation matrix is generated to define relationships between the critical parameters motor current 1002A, motor voltage 1002B, inlet pressure 1002C, inlet temperature 1002D, fan speed in x-direction 1002E, fan speed in y-direction 1002F, waste gas fan rotation per minute (RPM) 1002G. For example, the correlation between pressure and temperature was 0.65, pressure and speed was 0.95, temperature and speed was 0.7.

Furthermore, the forecast model is generated based on the correlation matrix. In an embodiment, the forecast model is a machine learning model trained on the relationships derived from the correlation matrix. The term "machine learning model" as used herein refers to a prediction model given a set of training dataset. In general, each individual sample of the training data is a pair containing a dataset (e.g., critical parameters and relationship between the critical parameters) and a desired output value or dataset (e.g., forecasted values of the critical parameters in a given time period). The machine learning model analyzes the training data and produces a predictor function. The predictor function, once derived through training, is capable of reasonably predicting or estimating the correct output value or dataset. In particular, the trained machine learning model receives the data from the correlation matrix and predicts forecasted values of the critical parameters in real-time. Exemplary machine learning models may include artificial intelligence model such as deep neural network, convolutional neural network, and the like.

At step 308, values of the critical parameters of the asset 105 are predicted based on the generated forecast model for a given time period. In a preferred embodiment, the machine learning model is a vector auto-regression model. Notably, the regression model is trained on condition data, identified critical parameters and relations therebetween. The machine learning model is trained with the correlation matrix as a regressor and forecasted values for critical parameters as a target variable. In an embodiment, the forecasted values are determined for the critical parameters and correlations between them based on an extracted feature vector using the trained machine learning model. The extracted feature vector is inputted at an input node of the trained machine learning model. The feature vector is a regressor variable for the machine learning model. Subsequently, the forecasted value is outputted at an output node of the trained machine learning model.

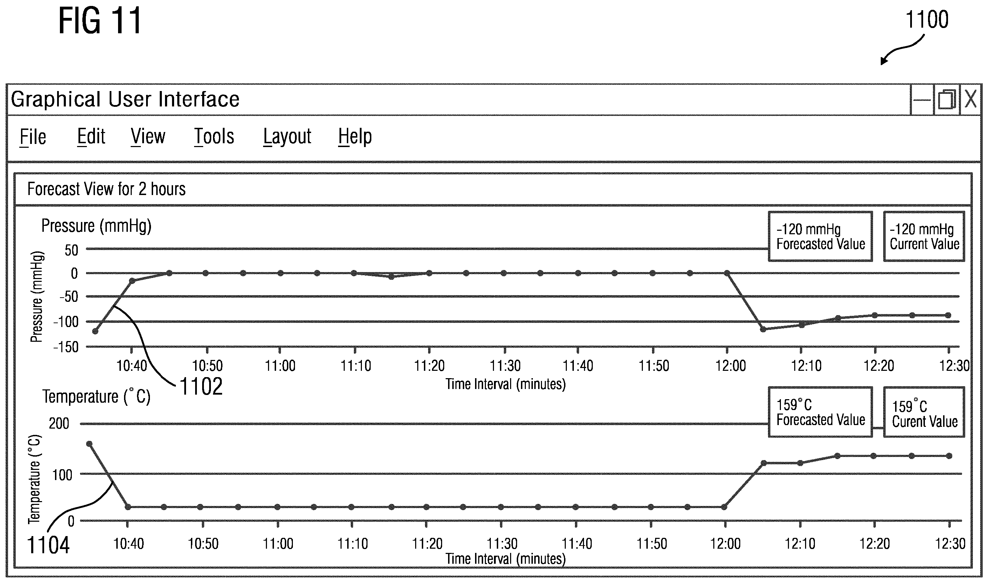

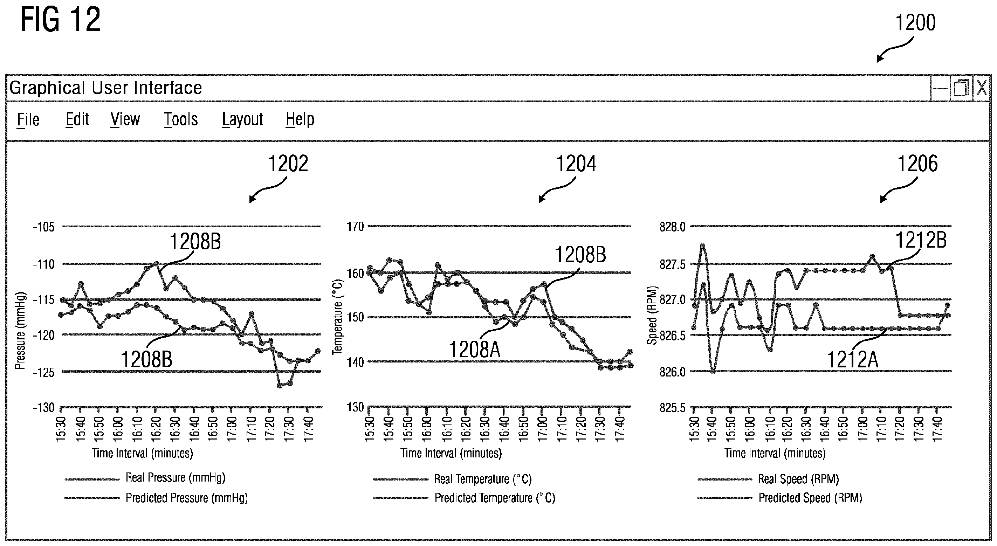

In an embodiment, the predicted values of the critical parameters are represented on the display device 130. One such example is shown in FIG 11 and FIG 12. Referring to FIG 11, depicted is a Graphical User Interface view 1100 showing forecasted values and current values of critical parameters for a particular time period, in accordance with an embodiment of the present disclosure. Herein, the time period is considered as 2 hours. The displayed graph 1102 represents the forecasted values of pressure with respect to time. Also, the displayed graph 1104 represents the forecasted values of temperature with respect to time. The current values of temperature and pressure as observed in real-time are also displayed on the Graphical User Interface 1100 for easy interpretation of data. Referring to FIG 12, depicted is a Graphical User Interface view 1200 showing forecasted values and current values of critical parameters for a particular time period, in accordance with another embodiment of the present disclosure. Herein, a graphical view of comparisons of forecasted value and current value with respect to time are shown for different critical parameters of the asset 105. The graph 1202 represents comparison of forecasted value of pressure and current value of pressure with respect to time. The graph 1204 represents comparison of forecasted value of temperature and current value of temperature with respect to time. The graph 1206 represents comparison of forecasted value of speed and current value of speed with respect to time. As shown, line plot 1208A represents variation in current value of pressure with respect to time and line plot 1208B represents variation in forecasted value of pressure with respect to time. Similarly, line plot 1210A represents variation in current value of temperature with respect to time and line plot 1210B represents variation in forecasted value of temperature with respect to time. Similarly, line plot 1212A represents variation in current value of speed with respect to time and line plot 1212B represents variation in forecasted value of speed with respect to time.

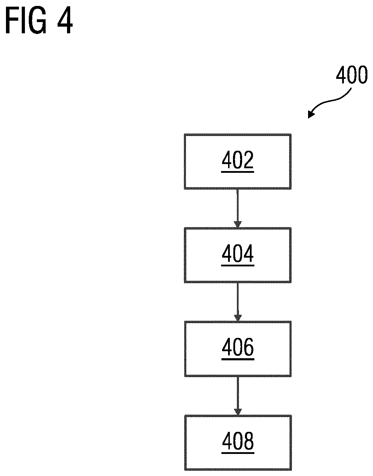

At step 310, it is determined whether the predicted values of the critical parameters are within the operational range of the critical parameters. At step 312, one or more actions are recommended on the display device 130 if the predicted values of the critical parameters are beyond the operational range of the critical parameters. According to an embodiment, when the predicted range of values are beyond the operational range of the critical parameters, a fault may have occurred in the asset 105. The detection of at least one fault in the asset 105 may be determined using a first machine learning model. The detection of at least one fault in the asset is explained in greater detail in FIG 4.

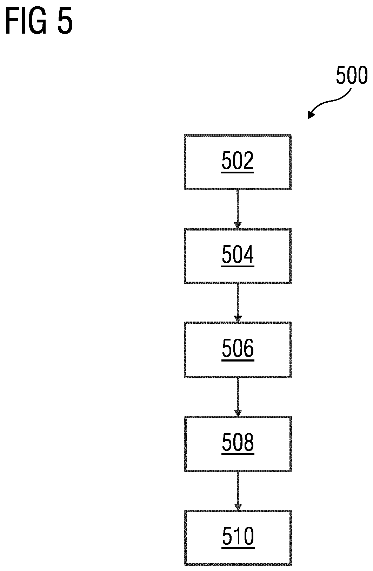

In one embodiment, the recommendations may be generated based on information stored in the database 165. The database 165 may be queried using a graphy query language. The query may be based on keywords corresponding to the impact on the performance of the asset 105, anomalies of the asset 105, detected faults of the asset 105 and the like. The one or more responses correspond to recommendations for monitoring the asset 105. Further, notifications may be generated and the is provided an alert if the the predicted values of the critical parameters are beyond the predefined range of values of the critical parameters of the asset 105. According to an embodiment, a deviation in the operation of the asset 105 is determined if the the predicted values of the critical parameters are beyond the operational range of the critical parameters of the asset 105. The method of determining deviation is explained in greater details in FIG 5.

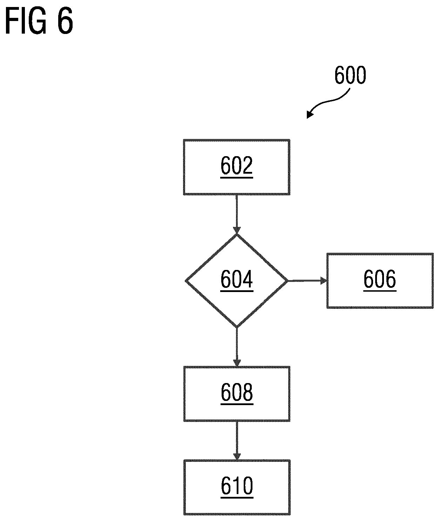

According to an embodiment, an accuracy of the forecast model is determined based on a comparison between the predicted values of the critical parameters and current values of the critical parameters for the given time period. The values of the critical parameters as obtained from the sensing units 125 is recorded and is compared with the corresponding predicted values within the time period. The comparison enables the system 100 to evaluate performance of the forecast model. In an embodiment, the forecast model is retrained using a reinforcement learning model if the accuracy of the forecast model is below a predetermined threshold value. The threshold value corresponds to a quantitative value below which the forecast model outputs inaccurate values. The term "reinforcement learning model" as used herein refers to a machine learning model capable of determining an accuracy of the forecast model and retraining the forecast model in case the accuracy is below the predetermined threshold value. The reinforcement learning model is deployed because the condition data is dynamic and may affect the performance of the forecast model. In an example, the reinforcement learning model deploys an agent which continuously interacts with forecast model to determine the accuracy. When the accuracy is below the predetermined threshold value, then the forecast model is retrained. The retraining of the forecast model is explained in greater detail in FIG 6.

FIG 4 depicts a flowchart of a method 400 for determining the at least one fault associated with the asset 105 based on the received condition data using a first trained machine learning model, in accordance with an embodiment of the present invention. At step 402, condition data is received from one or more sensing units 125 associated with the asset 105 in real-time. The condition data is received in real-time such that the faults may be detected as they occur in the asset 105. At step 404, at least one fault is detected in the received condition data. In an example, a fault may be occurred in the asset 105 due to anomalies in one or more parameters. Non-limiting examples of such parameters may include pressure, temperature, vibrations, speed, voltage, current and so forth. The at least one fault may include, but not limited to, locked rotor, under voltage, over voltage, over loading, single phasing, and unbalanced supply voltage. At step 406, the detected fault is classified into at least one of predetermined classes of faults in the asset 105 using the trained first machine learning model. Herein, the predetermined classes may include locked rotor, under voltage, over voltage, over loading, single phasing, and unbalanced supply voltage. The first machine learning model is trained to classify a detected fault in the asset 105 into the predetermined classes based on a labelled training dataset. In an example, the input to the first machine learning model is the RMS value of 3 phase voltage and current drawn by the asset 105.

The term "machine learning model" as used herein refers to a prediction model given a set of training dataset. In general, each individual sample of the training data is a pair containing a dataset (e.g., labelled faults) and a desired output value or dataset (e.g., determined faults in the asset 105). Exemplary machine learning models may include artificial intelligence model such as deep neural network, convolutional neural network, and the like. In an exemplary embodiment, the condition data is acquired using squirrel gage induction motor. The labelled training dataset is created with the help of domain expertise since fault corresponds to a different pattern of current and voltage values. In an example, in case of locked rotor fault, the current increases thrice the current value of normal operation. In another example, in case of single phasing, one of the phase voltages would be low and voltage and current in the other two phases would have increased. In yet another example, in case of phase imbalance the percentage value of imbalance between the voltage would be greater than 5%. Notably, other fault patterns are also identified and labelled accordingly in a similar manner.

Notably, the training dataset is collected, and the subsequently cleaned to remove noise. Further, the dataset is normalized, and variables are obtained from therein. The cleaned data set is divided into three parts as training set, validation set and test set. The first machine learning model is trained using the training set and validation set. Further, the first machine learning model is tested using the testing set. In an example, the optimal values of model parameters i.e. kernel, gamma (γ) and c are determined using the Gridserch cv algorithm. Therefore, the first machine learning model is trained on RBF kernel with gamma and c value as 0.0001 and 1 respectively. In this particular embodiment, the training and testing accuracy achieved is 92%.

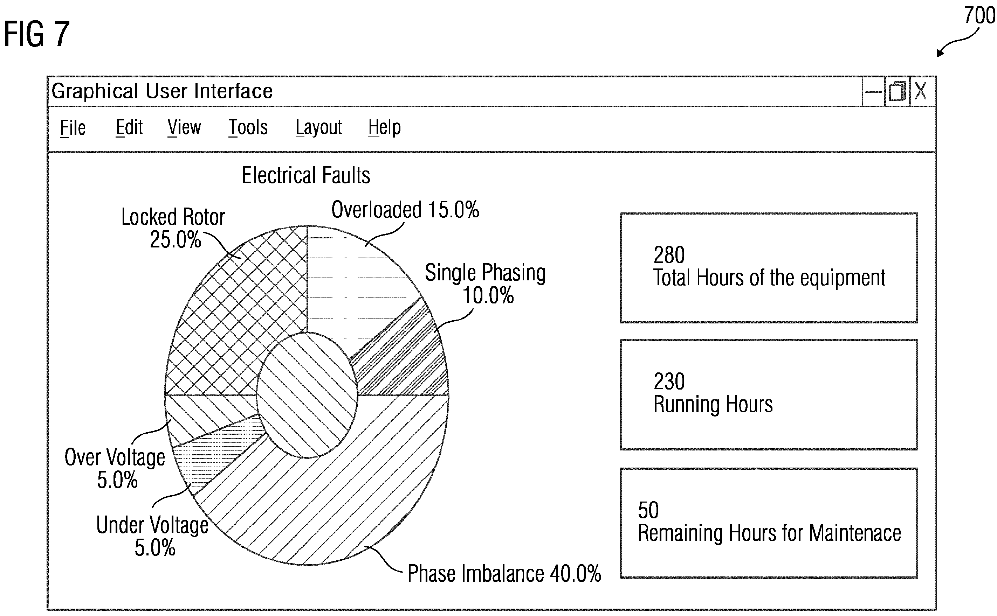

At step 408, determining the at least one fault associated with the received condition data based on the classification. Once a fault is detected in the asset 105, the condition data is input to the first machine learning model and the output is the type of faults detected. Furthermore, when the fault is determined, a notification may be generated on the display device 130 which informs the user of the type of fault detected in the asset 105. Furthermore, the determined faults may be stored and a report may also be generated after regular intervals of time to provide an analysis of different types of faults occurred in the asset 105 over a period of time. Such a report is illustrated in FIG 7. FIG 7 is a Graphical User Interface view 700 showing an example of determined faults, in accordance with an embodiment of the present invention. As shown, a report is generated representing all the detected faults in the asset for 230 running hours. The report also elaborates the frequency of detected faults for the given time period. Advantageously, the frequency of the determined faults provides an insight into failures that may occur in the asset 105 in future.

According to an embodiment, remaining maintenance life of the asset 105 is determined based on the at least one fault associated with asset 105 based on the classification. The detected faults are classified into different types of faults using the first trained machine learning model. The faults are stored in the database 165 and then remaining maintenance life of the asset 105 is determined based on the classified faults. The term 'remaining maintenance life' (RML) as used herein, refers to a duration between initiation of a detectable failure a functional failure of the asset 105. The remaining maintenance life may be estimated based upon observations, or average estimates of similar assets, components, or systems, or a combination thereof. For example, RML of a motor would be estimated by looking at the historical data of similar motors. Advantageously, the invention predicts RML to schedule maintenance activities, optimize operating efficiency, and avoid unplanned downtime.

According to an embodiment, a degradation model of the asset 105 is generated based on the determined at least one fault associated with the asset based on the classification. Further, the remaining maintenance life of the asset 105 is determined based on the generated degradation model. In particular, the degradation model is a machine learning model trained on the labelled faults that occur in the asset 105 over a period of time. The faults that in the asset 105 may include, but not limited to, high vibrations, electrical surges, bearing temperature, lube oil system parameters, thermal overloads, fluctuation in one or more parameters such as pressure increase or decrease, speed increase or decrease, voltage fluctuations and so forth. The one or more faults that occur in the asset 105 are obtained from the sensing units 125 and are then labelled with the help of service engineers.

Whenever a fault is detected in the asset 105, then the fault is captured by the sensing unit 125 and is labelled accordingly. For example, a damage in the winding may be detected as a fault which may have occurred due to high input current. Such an instance would be stored and labelled accordingly with the help of the triggers obtained from the sensing units 125. In some cases, the sensing units 125 will not be able to capture the fault type. For example, one of the stator bars is broken then the type of fault that has occurred is labelled manually when the asset 105 is under maintenance. Subsequently, an impact of the faults on the asset 105 is determined. The impact of the one or more parameters are correlated with respect to the number of hours of operation and planned maintenance cycle. Such data is collected over a period of time and the degradation model is trained on the collected data. Therefore, the degradation model is built to predict the remaining maintenance life of the asset 105. The degradation model defined degradation profiles for one or more assets and predicts the RML of a particular asset 105 by comparison of the degradation profile of the asset 105 with other similar degradation profiles of other assets. In an embodiment, the degradation model estimates the RML of the asset 105 by predicting when the parameters (or sometimes referred to as condition indicators) like pressure, temperature and speed are beyond a threshold value. The condition parameters can also be used with a fused condition indicator that incorporates information from more than one condition indicators using techniques such as principal component analysis. Advantageously, the present invention may not be dependent on the run-to-failure/maintenance data of the asset 105 like in existing solutions. It would be appreciated that the degradation model as disclosed herein may be built with limited information about the predefined threshold ranges, for example, the temperature of a liquid pumped cannot exceed 70 degree C and pressure must be under 10 bar.

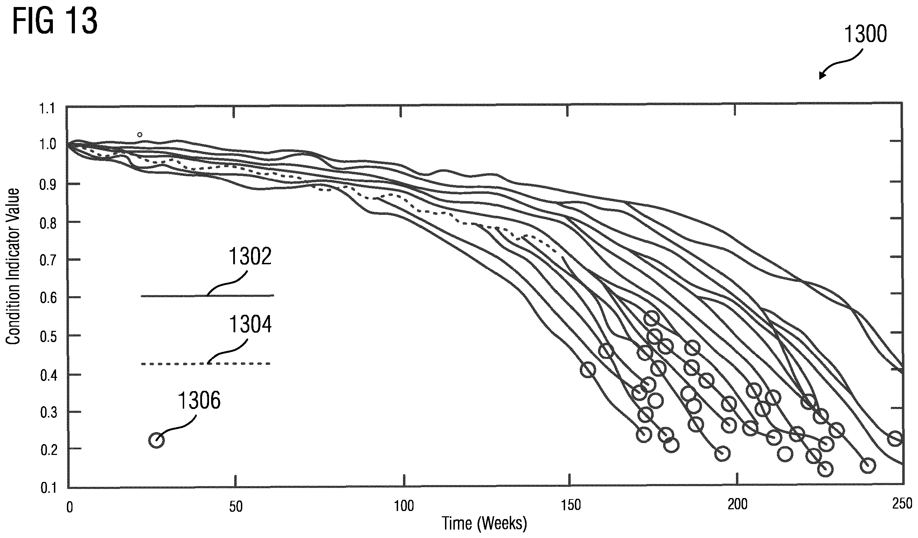

FIG 13 is a Graphical User Interface view 1300 showing degradation profiles for estimation of remaining maintenance life of the asset 105, in accordance with another embodiment of the present disclosure. As shown, the degradation profiles of one or more assets are represented by line plots 1302, the degradation profile of the asset 105 is represented by the line plot 1302, and one or more faults detected in the one or more assets are represented by point plots 1306. Herein, line plot 1304 is generated based on other degradation profiles 1306 similar to the degradation of the asset 105. The degradation model thereby predicts the RML of the asset 105. In an example, the RML is estimated to be 60 weeks from a particular point in time. A notification is accordingly generated to notify the user to plan maintenance activities within 60 weeks.

FIG 5 depicts a flowchart of a method 500 for determining a deviation in the operation of the asset 105 using a second trained machine learning model, in accordance with an embodiment of the present invention. The second machine learning model is trained to determine the deviation in the current values of the critical parameters. In an example, the input to the second machine learning model is the condition data received by the sensing units 125. The term "machine learning model" as used herein refers to a prediction model given a set of training dataset. In general, each individual sample of the training data is a pair containing a dataset (e.g., labelled threshold values) and a desired output value or dataset (e.g., determined threshold value of the critical parameters of the asset 105). Exemplary machine learning models may include artificial intelligence model such as deep neural network, convolutional neural network, and the like. The second machine learning model is trained on values of operational ranges of a plurality of assets. Subsequently, the second machine learning model is able to predict the operational ranges of the asset 105. Advantageously, the threshold values or the operational ranges of the asset 105 are predicted dynamically by the second machine learning model based on the dynamic condition data received in real-time. It will be appreciated that the operational ranges of the asset 105 may vary at different stages of the lifecycle of the asset 105. Therefore, the second machine learning model is trained to determine and update the operational ranges of the asset 105 in a dynamic manner.

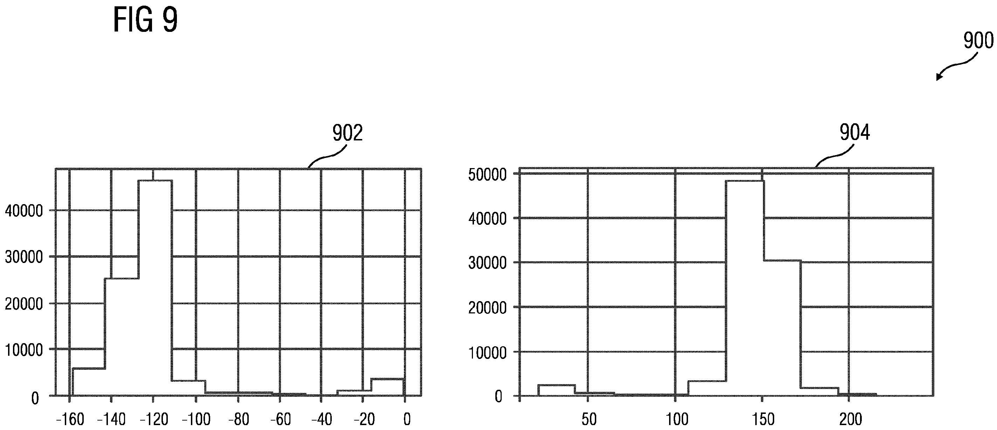

At step 502, a value of a lower limit of the identified critical parameters of the asset 105 is calculated based on the received condition data. The second trained machine learning model determines the lower limit of the asset 105. At step 504, a value of an upper limit of the identified critical parameters of the asset 105 is determined based on the received condition data. The second trained machine learning model determines the upper limit of the asset 105. At step 506, the operational range of the asset 105 is determined based on the calculated lower limit and calculated upper limit of each of the identified critical parameters of the asset 105. The operational range is the predefined range of values within which the performance of the asset is optimal. In an example, the deviation in the parameters such as pressure, temperature, vibrations, speed, voltage, current, and so forth is determined by the second machine learning model. The condition data received from the sensing units125 is preprocessed to clean and normalize the data. Furthermore, operational ranges of the parameters are determined using the lower limit and upper limit calculated. The second machine learning model employs statistical techniques such as measurement of dispersions and central tendency and box plots that are used to visualize the data. Moreover, several derived variables are also calculated such as rate of change (percentage change from previous value to current value) to improve the output of the second machine learning model. The operational ranges of the critical parameters as obtained from the second machine learning model may be presented to the user on the display device 130. Such an example is illustrated in FIG 9. The parameters may be further fine tuned by the user. FIG 9 is a Graphical User Interface view 900 showing an example of operating range of critical parameters as obtained from condition data, in accordance with an embodiment of the present invention. As shown, the graph 902 represents threshold values for inlet pressure as determined by the second machine learning model. The graph 904 represents threshold values for inlet temperature as determined by the second machine learning model.

In an example, the operational ranges as derived from the second machine learning model may be as shown in Table 1.

**Table 1**

| Critical Prameters | Operational range |
|---|---|
| Pressure | -110 to 150 pascal |
| Temperature | - 120 to 160 °C |
| Vibrations | 130 to 160 µm |
| Speed | 750 to 850 RPM |
| Voltage | 4% deviation from the mean value |
| Current | 4% deviation from the mean value |

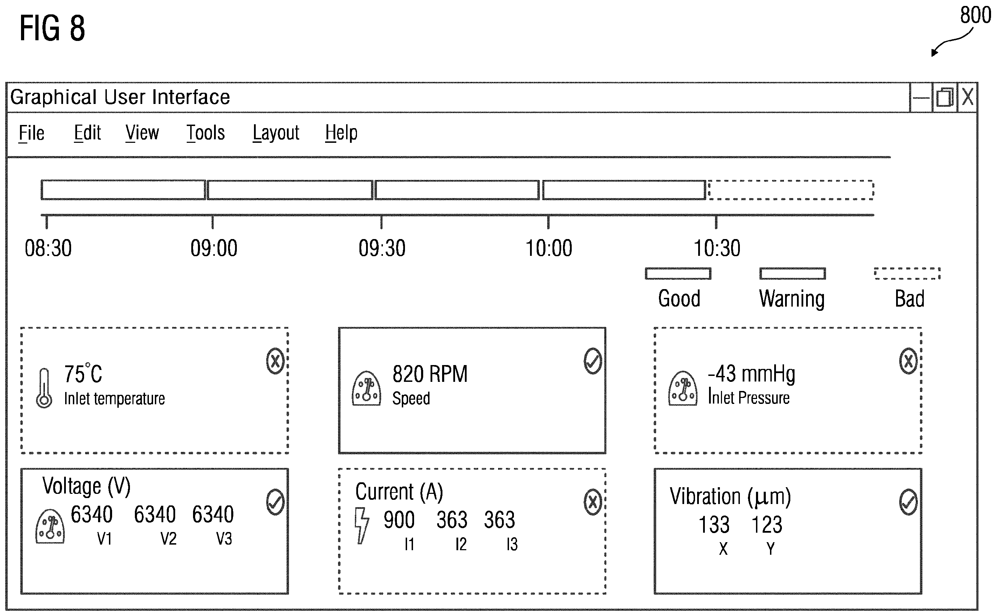

At step 508, it is determined whether the current values of the critical parameters of the asset 105 are within the determined operational range. The current operating values of the asset 105 are received from the sensing units 125 and is compared with the upper limit and lower limit of the respective critical parameters. In a case, when the current operating values of the asset 105 are within the determined operational rang, then the status of the asset 105 is stated as optimal. At step 510, a deviation in current values of the critical parameters of the asset 105 is determined if the current values are beyond the determined operational range. In an embodiment, a level of criticality of the deviation in current values of the critical parameters of the asset 105 is determined with respect to the determined operational range. Notably, the extent of deviation in the critical parameters is proportional to the level of criticality of the deviation. In an example, the level of criticality is categorized under different levels such as good, warning, and bad. Such an example is illustrated in FIG 8. FIG 8 is a Graphical User Interface view 800 showing an example criticality of deviation of critical parameters, in accordance with an embodiment of the present invention. As shown, different categories of level of criticality may be good, warning, bad and represent the overall health condition of the asset 105. As an example, the category good would correspond that there is no deviation, the category warning would correspond that there is considerable deviation and the asset 105 may require maintenance, the category bad would correspond that there is extensive deviation and the asset 105 may breakdown in a period of time. The RML may also be calculated as aforementioned and presented on the display device 130. Furthermore, level of criticality in deviation of each of the critical parameters is also displayed on the user interface 800.

FIG 6 depicts a flowchart of a method 600 for retraining the forecast model using a reinforcement learning model, in accordance with an embodiment of the present invention. At step 602, the forecast model is retrained using a new set of training data. It will be appreciated that since the system 100 is deployed in a dynamic environment such as an industrial installation, the training dataset on which the forecast model is trained need to be updated with a new dataset to maintain an optimal accuracy of the forecast model. Therefore, when the performance of the forecast model degrades, the forecast model is trained on a new set of training data. The new set of training data is condition data of the asset 105 obtained from various sources. At step 604, the accuracy of the retrained forecast model is evaluated. The accuracy of the retrained forecast model is compared with the predefined threshold value. When the accuracy of the retrained forecast model is above the predefined threshold value, then step 606 is executed. At step 606, the retrained forecasted model is deployed to predict values of the critical parameters of the asset 105 based on the generated forecast model for the given time period. When the accuracy of the retrained forecast model is below the predefined threshold value, then step 608 is executed. At step 608, the values of the critical parameters, correlation between critical parameters and predefined operational ranges of the asset 105 is evaluated based on the current condition data received in real-time. At step 610, the retrained forecast model is updated based on the evaluation. It will be appreciated that the new set of training data may not improve the accuracy of the model, therefore the values of the critical parameters, correlation between critical parameters and predefined operational ranges of the asset 105 are evaluated and updated. In an example, the critical parameters may have changed over a period of time, then new critical parameters are identified which are relevant to a current scenario in the industrial environment. An updated correlation matrix is generated based on the new critical parameters and the retrained forecast model is updated based on the updated correlation matrix. The invention ensures that the performance of the forecast model is continuously monitored and if required, the forecast model is retrained and updated accordingly in order to predict accurate values of the critical parameters, thereby accurately monitoring the overall condition of the asset 105. In another embodiment, the forecast model is retrained after regular intervals of time. In an example, the user may provide a frequency of retraining the forecast model and the forecast model may be retrained based on the frequency provided by the user. For example, the forecast model is retrained every month.

The present invention provides an accurate, time-efficient ad automatic method and system for monitoring the assets 105. The present invention facilitates accurate determination of remaining maintenance life (RML) of the asset 105 by generating a degradation model based on determined faults and related maintenance information. Advantageously, the present invention classifies and labels of identified faults under different classes to effectively determine which particular faults have a higher frequency and require further root cause analysis. Furthermore, the invention determines one or more actions that need to be performed in order to efficiently operate the asset 105 so as to mitigate any major failures. Furthermore, the present invention provides a method to dynamically determine threshold values of the critical parameters to determine operational ranges of the asset 105. Moreover, the present invention provides a method to retrain the forecast models based on updated condition data over a period of time. Such a method mitigates errors in the forecast model and ensures that the accuracy of the forecast model is at an optimal level.

The present invention is not limited to a particular computer system platform, processing unit, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of system, and is not limited to any particular distributed architecture, network, or communication protocol.

While the invention has been illustrated and described in detail with the help of a preferred embodiment, the invention is not limited to the disclosed examples. Other variations can be deducted by those skilled in the art without leaving the scope of protection of the claimed invention.

## Claims

1. A computer-implemented method (300) for monitoring condition of an asset (105) in a technical installation, the method comprising:
receiving, by a processing unit (135), condition data from one or more sources associated with the asset (105), wherein the condition data is multivariate data indicative of one or more operating conditions of the asset (105);
determining, by the processing unit, one or more critical parameters associated with the operation of the asset (105) based on the received condition data;
generating, by the processing unit, a forecast model trained on received condition data and a correlation matrix as a regressor variable for the forecast model (1000), wherein the correlation matrix is calculated by the processing unit, and wherein the correlation matrix represents a mathematical relationship between each of the identified critical parameters associated with the asset (105);
predicting, by the processing unit, values of the critical parameters of the asset (105) as output of the generated forecast model for a given time period;
determining, by the processing unit, whether the predicted values of the critical parameters are within a predefined operational range of the critical parameters for the given time period; and
recommending, by the processing unit, one or more actions, on a display device (130) if the predicted values of the critical parameters are beyond the predefined operational range of the critical parameters of the asset (105).

2. The method according to claim 1 further comprising:
evaluating an accuracy of the forecast model based on a comparison between the predicted values of the critical parameters and current values of the critical parameters for the given time period;
retraining the forecast model using a reinforcement learning model if the accuracy of the forecast model is below a predefined threshold value.

3. The method according to claims 1, further comprises determining at least one fault associated with the asset (105) based on the received condition data using a first trained machine learning model.

4. The method according to claim 3, wherein determining the at least one fault associated with the asset (105) based on the received condition data using the first trained machine learning model comprises:
receiving, by a processing unit (135), condition data from one or more sensing units (125) associated with the assets (105) in real-time;
detecting at least one fault in the received condition data;
classifying, using the trained first machine learning model, the detected fault into at least one of predetermined classes of faults in the asset (105);
determining the at least one fault associated with the asset (105) based on the classification.

5. The method according to claim 1 further comprising determining a deviation in the operation of the asset (105) using a second trained machine learning model.

6. The method according to claim 5, wherein determining a deviation in the operation of the asset (105) using a second trained machine learning model further comprises:
calculating a value of a lower limit of the identified critical parameters of the asset (105) based on the received condition data;
calculating a value of an upper limit of the identified critical parameters of the asset (105) based on the received condition data;
determining an operational range of the asset (105) based on the calculated lower limit and calculated upper limit of each of the identified critical parameters of the asset;
determining whether the current values of the critical parameters of the asset (105) are within the determined operational range; and
determining a deviation in current values of the critical parameters of the asset (105) if the current values are beyond the determined operational range.

7. The method according to claim 6 further comprises determining a level of criticality of the deviation in current values of the critical parameters of the asset (105) with respect to the determined operational range.

8. The method according to any of the claims 4 to 7 further comprising determining remaining maintenance life of the asset (105) based on the determined at least one fault associated with the received condition data based on the classification.

9. The method according to claim 8, wherein determining remaining maintenance life of the asset (105) comprises:
generating, by a processing unit (135), a degradation model of the asset (105) based on the determined at least one fault associated with the received condition data based on the classification;
determining the remaining maintenance life of the asset (105) based on the generated degradation model.

10. The method according to claim 2, wherein retraining the forecast model using the reinforcement learning model if the accuracy of the forecast model is below the predefined threshold value comprises:
retraining the forecast model using a new set of training data;
evaluating the accuracy of the retrained forecast model;
evaluating the values of the critical parameters, correlation between critical parameters and operational ranges of the asset (105) based on the current condition data received in real-time, if the accuracy of the retrained forecast model is below the predefined threshold value; and
updating the retrained forecast model based on the evaluation.

11. The method according to any of the preceding claim wherein the forecast model is retrained after regular intervals of time.

12. The method according to any of the preceding claims further comprising rendering a representative view of the of the condition of the asset (105) on a display device (130).

13. An apparatus (110) for monitoring condition of an asset (105) in a technical installation, the apparatus comprising:
one or more processing units (135); and
a memory unit (140) communicatively coupled to the one or more processing units (135), wherein the memory unit comprises an asset monitoring module stored in the form of machine-readable instructions executable by the one or more processing units, wherein the asset monitoring module (160) is configured to perform method steps according to claims 1 to 12.

14. A system (100) for monitoring condition of an asset (105) in a technical installation, the system comprising:
one or more devices (115) capable of providing condition data associated with operation of the assets (105) in a plurality of technical installations;
an apparatus (110) communicatively coupled to the device (115) according to claim 13, wherein the apparatus is configured for monitoring condition of assets (105) installed in the plurality of technical installations.

15. A computer-program product having machine-readable instructions stored therein, which when executed by one or more processing units (135), cause the processing units to perform a method according to claims 1 to 12.

## Patentansprüche

1. Computerimplementiertes Verfahren (300) zum Überwachen des Zustands eines Assets (105) in einer technischen Installation, wobei das Verfahren Folgendes umfasst:
Empfangen von Zustandsdaten von einer oder mehreren Quellen, die mit dem Asset (105) assoziiert sind, durch eine Verarbeitungseinheit (135), wobei die Zustandsdaten multivariate Daten sind, die einen oder mehrere Betriebszustände des Assets (105) angeben;
Bestimmen eines oder mehrerer mit dem Betrieb des Assets (105) assoziierter kritischer Parameter durch die Verarbeitungseinheit auf der Basis der empfangenen Zustandsdaten;
Erzeugen eines an empfangenen Zustandsdaten trainierten Vorhersagemodells und einer Korrelationsmatrix als eine Regressorvariable für das Vorhersagemodell (1000), durch die Verarbeitungseinheit, wobei die Korrelationsmatrix durch die Verarbeitungseinheit berechnet wird und wobei die Korrelationsmatrix eine mathematische Beziehung zwischen jedem der identifizierten mit dem Asset (105) assoziierten kritischen Parameter repräsentiert;
Vorhersagen von Werten der kritischen Parameter des Assets (105) durch die Verarbeitungseinheit als Ausgabe des erzeugten Vorhersagemodells für einen gegebenen Zeitraum;
Bestimmen durch die Verarbeitungseinheit, ob die vorhergesagten Werte der kritischen Parameter innerhalb eines vordefinierten Betriebsbereichs der kritischen Parameter für den gegebenen Zeitraum liegen; und
Empfehlen einer oder mehrerer Aktionen auf einer Anzeigevorrichtung (130) durch die Verarbeitungseinheit, wenn die vorhergesagten Werte der kritischen Parameter außerhalb des vordefinierten Betriebsbereichs der kritischen Parameter des Assets liegen (105).

2. Verfahren nach Anspruch 1, ferner umfassend:
Bewerten einer Genauigkeit des Vorhersagemodells auf der Basis eines Vergleichs zwischen den vorhergesagten Werten der kritischen Parameter und aktuellen Werten der kritischen Parameter für den gegebenen Zeitraum;
Neutrainieren des Vorhersagemodells unter Verwendung eines Verstärkungslernmodells, wenn die Genauigkeit des Vorhersagemodells unter einem vordefinierten Schwellenwert liegt.

3. Verfahren nach Anspruch 1, ferner umfassend: Bestimmen mindestens eines mit dem Asset (105) assoziierten Fehlers auf der Basis der empfangenen Zustandsdaten unter Verwendung eines ersten trainierten Maschinenlernmodells.

4. Verfahren nach Anspruch 3, wobei Bestimmen des mindestens einen mit dem Asset (105) assoziierten Fehlers auf der Basis der empfangenen Zustandsdaten unter Verwendung des ersten trainierten Maschinenlernmodells Folgendes umfasst:
Empfangen von Zustandsdaten von einer oder mehreren Erfassungseinheiten (125), die mit den Assets (105) assoziiert sind, durch eine Verarbeitungseinheit (135) in Echtzeit;
Detektieren mindestens eines Fehlers in den empfangenen Zustandsdaten;
Klassifizieren des detektierten Fehlers in mindestens eine von vorbestimmten Klassen von Fehlern in dem Asset (105) unter Verwendung des trainierten ersten Maschinenlernmodells;
Bestimmen des mindestens einen mit dem Asset (105) assoziierten Fehlers auf der Basis der Klassifikation.

5. Verfahren nach Anspruch 1, ferner umfassend: Bestimmen einer Abweichung im Betrieb des Assets (105) unter Verwendung eines zweiten trainierten Maschinenlernmodells.

6. Verfahren nach Anspruch 5, wobei Bestimmen einer Abweichung im Betrieb des Assets (105) unter Verwendung eines zweiten trainierten Maschinenlernmodells ferner Folgendes umfasst:
Berechnen eines Werts einer Untergrenze der identifizierten kritischen Parameter des Assets (105) auf der Basis der empfangenen Zustandsdaten;
Berechnen eines Werts einer Obergrenze der identifizierten kritischen Parameter des Assets (105) auf der Basis der empfangenen Zustandsdaten;
Bestimmen eines Betriebsbereichs des Assets (105) auf der Basis der berechneten Untergrenze und berechneten Obergrenze jedes der identifizierten kritischen Parameter des Assets;
Bestimmen, ob die aktuellen Werte der kritischen Parameter des Assets (105) innerhalb des bestimmten Betriebsbereichs liegen; und
Bestimmen einer Abweichung der aktuellen Werte der kritischen Parameter des Assets (105), wenn die aktuellen Werte außerhalb des bestimmten Betriebsbereichs liegen.

7. Verfahren nach Anspruch 6, ferner umfassend: Bestimmen eines Kritikalitätsniveaus der Abweichung von aktuellen Werten der kritischen Parameter des Assets (105) in Bezug auf den bestimmten Betriebsbereich.

8. Verfahren nach einem der Ansprüche 4 bis 7, ferner umfassend: Bestimmen verbleibender Wartungslebensdauer des Assets (105) auf der Basis des bestimmten mindestens einen Fehlers, der mit den empfangenen Zustandsdaten assoziiert ist, auf der Basis der Klassifikation.

9. Verfahren nach Anspruch 8, wobei Bestimmen von verbleibender Wartungslebensdauer des Assets (105) Folgendes umfasst:
Erzeugen eines Verschlechterungsmodells des Assets (105) durch eine Verarbeitungseinheit (135) auf der Basis des bestimmten mindestens einen Fehlers, der mit den empfangenen Zustandsdaten assoziiert ist, auf der Basis der Klassifikation;
Bestimmen der verbleibenden Wartungslebensdauer des Assets (105) auf der Basis des erzeugten Verschlechterungsmodells.

10. Verfahren nach Anspruch 2, wobei Neutrainieren des Vorhersagemodells unter Verwendung des Verstärkungslernmodells, wenn die Genauigkeit des Vorhersagemodells unter dem vordefinierten Schwellenwert liegt, Folgendes umfasst:
Neutrainieren des Vorhersagemodells unter Verwendung eines neuen Satzes von Trainingsdaten;
Bewerten der Genauigkeit des neutrainierten Vorhersagemodells;
Bewerten der Werte der kritischen Parameter, der Korrelation zwischen kritischen Parametern und Betriebsbereichen des Assets (105) auf der Basis der aktuellen Zustandsdaten, die in Echtzeit empfangen werden, wenn die Genauigkeit des neutrainierten Vorhersagemodells unter dem vordefinierten Schwellenwert liegt; und
Aktualisieren des neutrainierten Vorhersagemodells auf der Basis der Bewertung.

11. Verfahren nach einem der vorhergehenden Ansprüche, wobei das Vorhersagemodell nach regelmäßigen Zeitintervallen neu trainiert wird.

12. Verfahren nach einem der vorhergehenden Ansprüche, ferner umfassend: Wiedergeben einer repräsentativen Ansicht des Zustands des Assets (105) auf einer Anzeigevorrichtung (130).

13. Einrichtung (110) zum Überwachen des Zustands eines Assets (105) in einer technischen Installation, wobei die Vorrichtung Folgendes umfasst:
eine oder mehrere Verarbeitungseinheiten (135); und
eine kommunikativ mit der einen oder den mehreren Verarbeitungseinheiten (135) gekoppelte Speichereinheit (140), wobei die Speichereinheit (140) ein Asset-Überwachungsmodul umfasst, das in Form von maschinenlesbaren Anweisungen gespeichert ist, die durch die eine oder die mehreren Verarbeitungseinheiten (135) ausführbar sind, wobei das Asset-Überwachungsmodul (160) dafür ausgelegt ist, die Verfahrensschritte nach einem der Ansprüche 1 bis 12 auszuführen.

14. System (100) zum Überwachen des Zustands eines Assets (105) in einer technischen Installation, wobei das System Folgendes umfasst:
eine oder mehrere Vorrichtungen (115), die in der Lage sind, Zustandsdaten bereitzustellen, die mit dem Betrieb der Assets (105) in mehreren technischen Installationen assoziiert sind;
eine kommunikativ mit der Vorrichtung (115) nach Anspruch 13 gekoppelte Einrichtung (110), wobei die Einrichtung ausgelegt ist zum Überwachen des Zustands von Assets (105), die in den mehreren technischen Installationen installiert sind.

15. Computerprogrammprodukt mit darin gespeicherten maschinenlesbaren Anweisungen, die bei Ausführung durch eine oder mehrere Verarbeitungseinheiten (135) bewirken, dass die Verarbeitungseinheiten ein Verfahren nach einem der Ansprüche 1 bis 12 ausführen.

## Revendications

1. Procédé (300), mis en œuvre par ordinateur, de surveillance de l'état d'un actif (105) dans une installation technique, le procédé comprenant :
la réception, par une unité de traitement (135), de données d'état provenant d'une ou de plusieurs sources associées à l'actif (105), les données d'état étant des données multivariées indiquant un ou plusieurs états de fonctionnement de l'actif (105) ;
la détermination, par l'unité de traitement, d'un ou de plusieurs paramètres critiques associés au fonctionnement de l'actif (105) sur la base des données d'état reçues ;
la génération, par l'unité de traitement, d'un modèle de prévision entraîné sur des données d'état reçues et une matrice de corrélation comme variable de régression pour le modèle de prévision (1000), la matrice de corrélation étant calculée par l'unité de traitement, et la matrice de corrélation représentant une relation mathématique entre chacun des paramètres critiques identifiés associés à l'actif (105) ;
la prédiction, par l'unité de traitement, de valeurs des paramètres critiques de l'actif (105) comme sortie du modèle de prévision généré pour une période de temps donnée ;
la détermination, par l'unité de traitement, si les valeurs prédites des paramètres critiques s'inscrivent dans une plage de fonctionnement prédéfinie des paramètres critiques pour la période de temps donnée ; et
la recommandation, par l'unité de traitement, d'une ou de plusieurs actions sur un dispositif d'affichage (130) si les valeurs prédites des paramètres critiques sortent de la plage de fonctionnement prédéfinie des paramètres critiques de l'actif (105) .

2. Procédé selon la revendication 1, comprenant en outre :
l'évaluation d'une exactitude du modèle de prévision sur la base d'une comparaison entre les valeurs prédites des paramètres critiques et des valeurs actuelles des paramètres critiques pour la période de temps donnée ;
le réentraînement du modèle de prévision à l'aide d'un modèle d'apprentissage par renforcement si l'exactitude du modèle de prévision est inférieure à une valeur seuil prédéfinie.

3. Procédé selon la revendication 1, comprenant en outre la détermination d'au moins un défaut associé à l'actif (105) sur la base des données d'état reçues à l'aide d'un premier modèle d'apprentissage machine entraîné.

4. Procédé selon la revendication 3, dans lequel la détermination de l'au moins un défaut associé à l'actif (105) sur la base des données d'état reçues à l'aide d'un premier modèle d'apprentissage machine entraîné comprend :
la réception, par une unité de traitement (135), de données d'état provenant d'une ou de plusieurs unités de détection (125) associées aux actifs (105) en temps réel ;
la détection d'au moins un défaut dans les données d'état reçues ;
la classification, à l'aide du premier modèle d'apprentissage machine entraîné, du défaut détecté dans au moins une de classes prédéterminées de défauts dans l'actif (105) ;
la détermination de l'au moins un défaut associé à l'actif (105) sur la base de la classification.

5. Procédé selon la revendication 1, comprenant en outre la détermination d'un écart dans le fonctionnement de l'actif (105) à l'aide d'un deuxième modèle d'apprentissage machine entraîné.

6. Procédé selon la revendication 5, dans lequel la détermination d'un écart dans le fonctionnement de l'actif (105) à l'aide d'un deuxième modèle d'apprentissage machine entraîné comprend :
le calcul d'une valeur d'une limite inférieure des paramètres critiques identifiés de l'actif (105) sur la base des données d'état reçues ;
le calcul d'une valeur d'une limite supérieure des paramètres critiques identifiés de l'actif (105) sur la base des données d'état reçues ;
la détermination d'une plage de fonctionnement de l'actif (105) sur la base de la limite inférieure calculée et de la limite supérieure calculée de chacun des paramètres critiques identifiés de l'actif ;
la détermination si les valeurs actuelles des paramètres critiques de l'actif (105) s'inscrivent dans la plage de fonctionnement déterminée ; et
la détermination d'un écart dans des valeurs actuelles des paramètres critiques de l'actif (105) si les valeurs actuelles sortent de la plage de fonctionnement déterminée.

7. Procédé selon la revendication 6, comprenant en outre la détermination d'un niveau de criticité de l'écart dans des valeurs actuelles des paramètres critiques de l'actif (105) par rapport à la plage de fonctionnement déterminée.

8. Procédé selon l'une quelconque des revendications 4 à 7, comprenant en outre la détermination de la durée de vie avant maintenance restante de l'actif (105) sur la base de l'au moins un défaut déterminé associé aux données d'état reçues sur la base de la classification.

9. Procédé selon la revendication 8, dans lequel la détermination de la durée de vie avant maintenance restante de l'actif (105) comprend :
la génération, par une unité de traitement (135), d'un modèle de dégradation de l'actif (105) sur la base de l'au moins un défaut déterminé associé aux données d'état reçues sur la base de la classification ;
la détermination de la durée de vie restante avant maintenance de l'actif (105) sur la base du modèle de dégradation généré.

10. Procédé selon la revendication 2, dans lequel le réentraînement du modèle de prévision à l'aide du modèle d'apprentissage par renforcement si l'exactitude du modèle de prévision est inférieure à la valeur seuil prédéfinie comprend :
le réentraînement du modèle de prévision à l'aide d'un nouvel ensemble de données d'entraînement ;
l'évaluation de l'exactitude du modèle de prévision réentraîné ;
l'évaluation des valeurs des paramètres critiques, de la corrélation entre des paramètres critiques et des plages de fonctionnement de l'actif (105) sur la base des données d'état actuelles reçues en temps réel, si l'exactitude du modèle de prévision réentraîné est inférieure à la valeur seuil prédéfinie ; et
la mise à jour du modèle de prévision réentraîné sur la base de l'évaluation.

11. Procédé selon l'une quelconque des revendications précédentes, dans lequel le modèle de prévision est réentraîné après des intervalles de temps réguliers.

12. Procédé selon l'une quelconque des revendications précédentes, comprenant en outre le rendu d'une vue représentative de l'état de l'actif (105) sur un dispositif d'affichage (130).

13. Appareil (110) de surveillance de l'état d'un actif (105) dans une installation technique, l'appareil comprenant :
une ou plusieurs unités de traitement (135) ; et
une unité de mémoire (140) couplée en communication aux une ou plusieurs unités de traitement (135), l'unité de mémoire comprenant un module de surveillance d'actif stocké sous la forme d'instructions lisibles par machine exécutables par les une ou plusieurs unités de traitement, le module de surveillance d'actif (160) étant configuré pour réaliser les étapes de procédé selon les revendications 1 à 12.

14. Système (100) de surveillance de l'état d'un actif (105) dans une installation technique, le système comprenant :
un ou plusieurs dispositifs (115) aptes à fournir des données d'état associées au fonctionnement des actifs (105) dans une pluralité d'installations techniques ;
un appareil (110) couplé en communication au dispositif (115) selon la revendication 13, l'appareil étant configuré pour surveiller l'état d'actifs (105) installés dans la pluralité d'installations techniques.

15. Produit-programme d'ordinateur dans lequel sont stockées des instructions lisibles par machine qui, lorsqu'elles sont exécutées par une ou plusieurs unités de traitement (135), amènent les unités de traitement à réaliser un procédé selon les revendications 1 à 12.
